# EUROPEAN PATENT APPLICATION

(11) **EP 2 071 158 A1**
(43) Date of publication of application: **17.06.2009**
(21) Application number: 07122894.4
(22) Date of filing: 11.12.2007
(51) Int. Cl.: F02D 19/06, F02M 21/02, F02D 41/00

(54) **Device for injecting gas into a combustion engine, a set of gas injector valves, method for operating gas injector valves**

(71) Applicant: ROBERT BOSCH GMBH, 70442 Stuttgart (DE)
(72) Inventor: Liskow, Uwe, 71679, Asperg (DE)

(57) **Abstract**

The invention relates to a method for operating gas injector valves of an internal combustion engine running on gas and liquid fuel. To start the engine a shut off valve between a gas tank and a gas rail is closed and the combustion engine is operated with the liquid fuel. At least one gas injector valve is heated with an external heating element, and opened to inject gas from the gas rail into the combustion engine until the pressure in the gas rail is below a given value. When the pressure is low other gas injector valves are opened, while the shutoff valve is still closed, until the temperature of the valves reach a given value. Further the invention relates to a valve, a set of valves and a device to operate a gas fuel injection system.

## Description

### State of the Art

Combustion engines running on bi-fuel like liquid and gas fuels are known in the state of the art. These engines will have means to store both fuels, means to regulate the pressure in the fuel path, means to inject the fuels into a combustion cylinder, means to control the components of the injection system.

The patent DE10 2005 012 940 discloses such a fuel injection system.

### Advantages of the invention

The device for injecting gas into a combustion engine, the set of gas injector valves, the method for operating gas injector valves and the device to control the operation of a fuel injection system, with the features of the independent patent claims have the advantage of efficiently operating a combustion engine running on gas fuel, by overcoming the problem of stiction experienced by the gas injector valves, especially when the vehicle is started during cold conditions. The problems such as misfiring, caused due to delay in opening of the gas injector valves, are eliminated.

To overcome the problems of stiction it is sufficient to have only one of the gas injector valves per gas rail provided with an external heating element. It is not necessary to supply an external heater for all the gas injector valves, thus reducing the number of external heating elements required and also the wiring needed for the gas injector valves is reduced. This results in direct reduction in cost of the hardware components and its maintenance.

Furthermore, an intermediate step of operating all the gas injector valves for a predetermined time, when the vehicle is still running in liquid fuel mode, enables quick heating of all the valves, to reduce the problem of stiction for all valves. No further external heating elements or wiring is necessary.

When the combustion engine is started from a cold start condition, it may take up to 10 minutes to reach a temperature of the gas injector valves which ensures normal operation without the invention. Because many trips end within 10 minutes, these vehicles go almost exclusively in the liquid fuel mode which is not the purpose of the vehicle with bi-fuel engine and also leads to inefficient use of liquid fuel, because bi-fuel engine vehicles have only small liquid fuel tanks. Due to the invention the time to start normal gas operation is reduced to few seconds.

Further improvements and/or advantages are realised by the features of the dependent patent claims.

When the gas injector valve is opened when the engine is still running in liquid fuel mode, the liquid fuel supply to the cylinder is reduced appropriately to maintain air fuel ratio at a required range to achieve low exhaust emission. Abnormal combustion is also eliminated.

Once the pressure in the gas rail is below a given value, the cylinder with external heating element is switched back to liquid fuel mode, in order to prepare the engine for smooth transition from liquid fuel to gas fuel.

Thus at the end of the above mentioned sequences, the gas injector valves are ready for normal operation and the vehicle can be switched to gas mode within a short period of time.

Pressure sensing unit and temperature sensing units provide accurate results required for improving the operation of open-close state of the fuel injector valves. The overall operating efficiency of the internal combustion engine is improved.

### Brief description of the drawings:

Different embodiments of the invention are shown in the drawing and are described in detail in the description.
- Figure 1: shows a schematic of a combustion engine comprising fuel rails, gas injector valves and liquid fuel injector valves.
- Figure 2: shows a gas injector valve in more detail.
- Figure 3: shows the opening of a gas injector valve.
- Figure 4: shows the oil film formed on the gas injector valve.

### Description of the embodiments:

To achieve lower exhaust gas emissions, combustion engines running on gas fuel such as compressed natural gas are being used. The natural gas used as fuel for internal combustion engine, has the capability of producing less combustion pollutants and thereby decreasing engine operating costs without complex or simpler emission control devices.

These engines have capability to also run on liquid fuels like gasoline and diesel.

This invention deals with combustion engine operating on bi-fuel that means both, liquid fuels like gasoline or diesel and gas fuels like compressed natural gas CNG or LPG. The gas is supplied from a high pressure tank and is reduced to a lower working pressure.

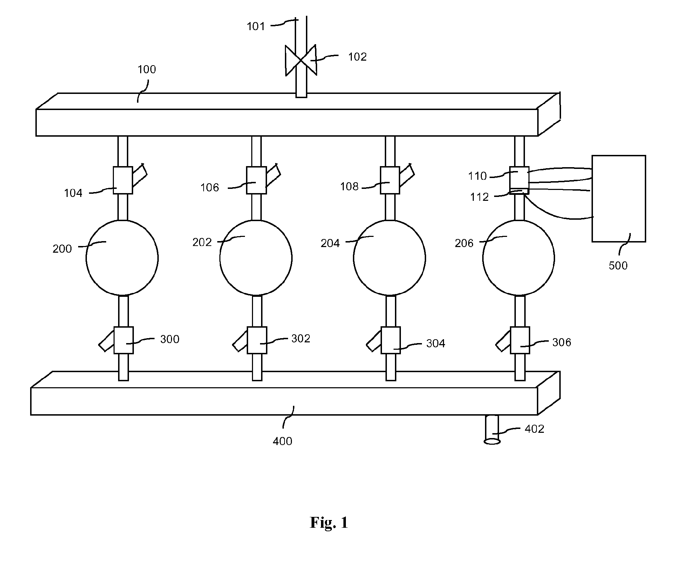

Figure 1 shows the schematic view of a combustion engine with a plurality of combustion cylinders 200, 202, 204, 206 in a bi-fuel injection system according to the invention. The cylinders operate with bi-fuel supplied form liquid fuel tank and gas fuel tank which are not shown in the figure. The liquid fuel tank storing the liquid fuel such as gasoline has a fuel supply path 402 delivering the liquid fuel to the liquid fuel rail 400. The liquid fuel is supplied through the liquid fuel rail 400 to liquid fuel injector valves 300, 302, 304 and 306. Here only four liquid fuel injector valves are shown as example for a four cylinder combustion engine. Most of the vehicles with internal combustion engines have several liquid fuel injector valves, intended to supply an appropriate number of combustion cylinders with the liquid fuel. The liquid fuel injector valves inject the liquid fuel into the combustion cylinders 200, 202, 204 and 206 either directly or into an intake manifold (not shown) of the combustion engine.

The gas fuel tank is a high pressure tank, a pressure regulator regulates the high pressure to a working pressure and delivers the gas fuel with reduced pressure via a gas fuel supply path 101 to a gas fuel rail 100. The fuel supply path 101 can be closed by shut off valve 102. The shut off valve 102 when closed prevents the flow of gas fuel from the gas fuel tank to the gas rail 100. Connected to the gas fuel rail are gas injector valves 104, 106, 108, 110 which are adapted to inject the gas fuel into the combustion cylinders. The gas fuel is normally injected into an intake manifold (not shown) of the combustion engine, through which the cylinders receive the air which is used to combust or burn the fuel. Alternatively direct injection into the cylinders is possible.

Sensing units such as pressure sensing unit and temperature sensing unit, which are not shown in the figure, are provided to measure the pressure and temperature of the gas fuel in the gas fuel rail and the subsequent gas injector valves 104, 106, 108, 110. Here only four injectors are shown as exemplary. Most of the vehicles with internal combustion engines have several gas injector valves, intended to supply an appropriate number of combustion chambers with the gas fuel.

An electronic control unit 500 regulates the operation of the fuel injector valves, controls the functions of the components of the fuel injector system and reads the data of the sensing units

All the fuel injectors are connected to the electronic control unit 500 through wires.

One of the gas injector valves 110 is supplied with an external heating element 112. It is also possible to have more than one of the gas injector valves supplied with external heating element. It is possible to have more than one gas fuel rail. At least one valve for each gas fuel rail should have an external heating element.

As will be described later, it is sufficient to have only one gas injector valve with external heating element per fuel rail. This reduces the necessary wiring between the electronic control unit 500 and the gas injector valves. Every gas injector valve has a wiring to connect a solenoid of the gas injector valve to the electronic control unit 500, but only the gas injector valve with external heating element has external wiring connected to the electronic control unit 500 for external heater.

To understand the usefulness of having such a heated valve, the problem of stiction has to be understood as will be described subsequently.

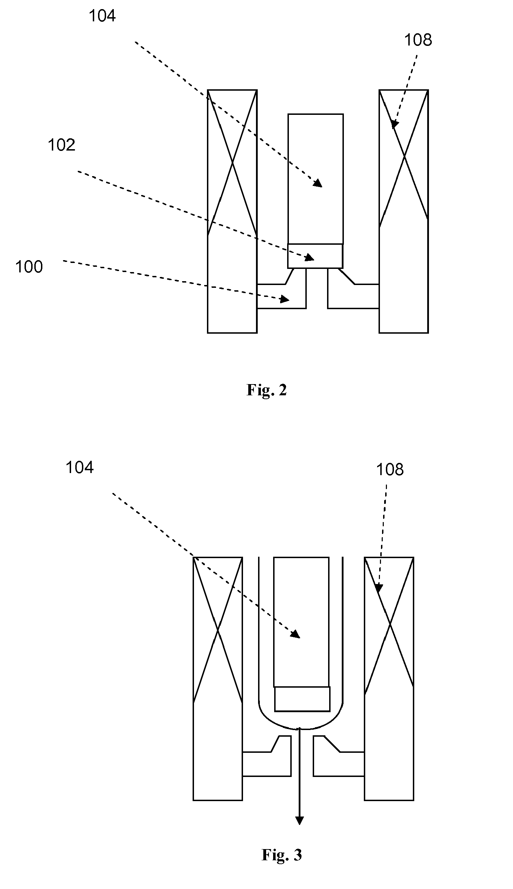

The gas fuel is supplied to the combustion cylinders by gas injector valve shown in figure 2.

Figure 2 shows the gas injector valve with a sealing seat consisting of a fixed part 100 made of metal and a moving plunger 104 with an elastomeric material 102 at the side which is pressed against the fixed part 100. The fixed part 100, the plunger 104, the solenoid 108 are shown here as a cut though the elements and all are circular elements which are rotational symmetric to an axis Z as shown in the figure 2. The elastomeric material gets compressed when the valve is closed and returns to its original shape when the valve is opened again. The opening and closing of the gas injector is controlled by a plunger 104 working against a spring which is not shown in the figure 2.

Force to operate or move the plunger 104 which is made of magnetic material, is produced by a current flow through a solenoid 108 surrounding the plunger. By applying the current, a magnetic field is generated which pulls the magnetic plunger away from the fixed part of the valve.

Figure 3 shows a gas injector valve in an open state. The solenoid 108 is activated, causing the plunger 104 to be pulled towards the solenoid by magnetic force. This uncovers the valve opening, allowing gas to flow, as shown by the arrow 109, into the combustion chamber. A valve spring, not shown in the figure, attached to the plunger returns the plunger to its original position when the solenoid is switched off, resulting in closing of the valve.

Generally when the temperature in the valve becomes cooler, the gas injector valves do not open reliably. Usually gas fuel contains small quantities of oil that cannot be removed completely by a filter or other element. During cold start of an engine, these oils which have low viscosity form an oil film on the sealing seat.

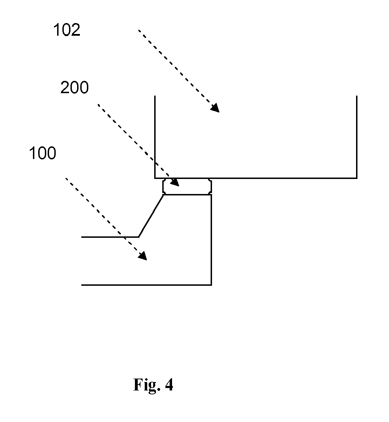

Figure 4 shows in detail the gas injector valve and the oil film 200 formed between the fixed part 100 of the gas injector valve and the moving part 102 of the gas injector valve.

The oil film 200 formed on the sealing seat, increases the force required to open the gas injector valves. The above problem leads to misfiring and delay in engine start, if started with gas fuel. The invention discloses a method to reduce an oil film on the seats of the gas injector valves and how the valves are opened in predetermined steps to reduce the problem of stiction.

The opening of the car door is detected and similar to the pre-operation of the fuel pump, the external heating element 112 in the gas injector valve 110 is activated, before the ignition is turned on.

The engine is started with liquid fuel supplied through the liquid fuel rail. Because of the activation of the external heating element, the temperature around the sealing seat of gas injector valve 110 reaches a temperature above +10 degrees. With the rise in the temperature, viscosity of oil film will decrease. This will enable the gas injector valve 110 to be opened easily in a controlled manner. The cylinder 206 is partially or fully switched to gas mode. The gas injector valve 110 injects the residual gas, which is left in the gas fuel rail 100 when the engine was running on gas fuel last time, into the combustion cylinder 206. This results in reduction of the pressure in the gas rail 100.

The injection duration must be appropriately calculated based on the pressure in the gas rail. Also as the gas fuel is injected into the cylinder 206, the amount of liquid fuel needs to be reduced. The electronic control unit 500 calculates the amount of liquid fuel to be reduced and also maintains the air fuel mixture ratio. Once the pressure in the gas rail is reached below a given value, the cylinder 206 is switched back to liquid fuel mode and the gas injector valve 110 is closed.

The system is now in a state where the gas fuel rail is empty and therefore opening of gas injectors now will have no influence on the engine operation.

Now the gas fuel injector valves are heated by applying a current to the solenoids 108 in figure 2, in each of the gas injector valves. The solenoid 108 in figure 2 has a resistance and when the solenoid is energized by a current flow, the gas injector valves are heated. All the gas injector valves are maintained in open state for a predetermined time. The opening of all the gas injector valves for a predetermined time enables internal heating of the valves to further enhance the operation of gas injector valves during cold start.

As there is no pressure in the gas rail 100, no gas is injected into the combustion cylinders, all the combustion cylinders still running on liquid fuel.

After the heating of the gas injector valves is performed for a predefined time to reach sufficient temperature in the gas injector valves, preparation for operating the combustion engine in gas mode begins. First all the gas injector valves are closed. Then the shut off valve 102 is opened and after the gas fuel rail is filled with gas, all the cylinders are switched to gas fuel mode. As the shut off valve is opened, now the gas injector valves are operated in normal mode, that is the supply of gas fuel is increased and the supply of liquid fuel is decreased.

By heating one of the gas injector valves by external heating element and by heating the other valves by solenoids, it is possible to switch the vehicle from liquid fuel to gas fuel within a short duration of about 2 seconds.

This invention of performing a preset operation of the gas injector valves prior to running the internal combustion engine in gas fuel, improves the performance of the gas injector valves. The invention overcomes the problem of stiction of the sealing seat of gas injector valves during cold start and enables efficient operation of the gas injector valves without any delay and in turn improves the overall efficiency of the internal combustion engine. The exhaust emission is also controlled efficiently.

## Claims

1. Device for injecting gas into a combustion engine **characterised by**, a gas injector valve and an external heating element for heating the gas injector valve.

2. A set of gas injector valves for injecting gas in a combustion engine, **characterised in that,** at least one gas injector valve having an external heating element and at least one gas injector valve not having an external heating element.

3. Method for operating gas injector valves of an internal combustion engine running on gas and liquid fuel, **characterised by** the steps of
- closing a shut off valve between a gas tank and a gas rail
- operating the combustion engine with the liquid fuel
- heating at least one gas injector valve with an external heating element, the gas injector valve being connected to the gas rail and capable of injecting gas into the combustion engine
- opening the heated gas injector valve to inject gas from the gas rail into the combustion engine until the pressure in the gas rail is below a given value
- subsequently opening gas injector valves, while the shutoff valve is still closed, until the temperature of the valves reach a given value.

4. Method of claim 3, **characterized in that,** when the gas is injected into the combustion engine, the amount of liquid fuel is appropriately reduced.

5. Method of claim 3, **characterised in that** when the pressure in the gas rail is reduced below a given value, the cylinder with externally heated gas valve, is switched back into liquid fuel mode

6. Method of claim 3, **characterized in that,** the step of opening gas injector valves, while the shutoff valve is still closed, until the temperature of the valves reach a given value, involves supplying electric power to a coil in the valves which produce a magnetic field to open the valves, the valves are heated by a resistive loss in the coil.

7. Method of claim 3, **characterized in that** after opening all the gas injector valves, the shutoff valve is opened to operate the internal combustion engine by gas fuel.

8. Device to control the operation of a fuel injection system of a gas fuel and a liquid fuel operated internal combustion engine, **characterized by** means to determine a start situation of the combustion engine, to close a shut off valve of a gas fuel injection system of the combustion engine and start the combustion engine by liquid fuel and further operate gas fuel injector valves of the combustion engine as in claim 3, while still holding the shutoff valve closed.

## Amended claims

### Amended claims in accordance with Rule 137(2) EPC.

**1.** Device for injecting gas into a combustion engine, **characterised by** a gas injector valve (110) and an external heating element (112) for heating the gas injector valve, the said heating element being positioned to rise the temperature around the sealing seat (1000, 1020) of the gas injector valve (110).

**2.** Device for injecting gas into a combustion engine according to claim 1 wherein the sealing seat (1000, 1020) comprises of a fixed metal part ( 1000 ) and a moving plunger (1040) with an elastomeric material (1020) attached to the plunger surface which presses against the fixed metal part (1000).

**3.** A set of gas injector valves (104, 106, 108, 110) for injecting gas in a combustion engine, **characterised in that**, at least one gas injector valve (110) having an external heating element (112) and at least one gas injector valve (104, 106, 108) not having an external heating element.

**4.** Method for operating gas injector valves (104, 106, 108, 110) of an internal combustion engine running on gas and liquid fuel, **characterised by** the steps of
- closing a shut off valve (102) between a gas tank and a gas rail (100)
- operating the combustion engine with the liquid fuel
- heating at least one gas injector valve (110) with an external heating element ( 112), the gas injector valve (110) being connected to the gas rail (100) and capable of injecting gas into the combustion engine
- opening the heated gas injector valve (110) to inject gas from the gas rail (100) into the combustion engine until the pressure in the gas rail (100) is below a given value
- subsequently opening gas injector valves (104, 106, 108) while the shutoff valve ( 102 ) is still closed, until the temperature of the valves ( 104, 106, 108) reach a given value.

**5.** Method of claim 4, **characterized in that**, when the gas is injected into the combustion engine, the amount of liquid fuel is appropriately reduced.

**6.** Method of claim 4, **characterised in that** when the pressure in the gas rail (100) is reduced below a given value, the cylinder with externally heated gas valve (110), is switched back into liquid fuel mode.

**7.** Method of claim 4, **characterized in that**, the step of opening gas injector valves ( 104, 106, 108), while the shutoff valve (102) is still closed, until the temperature of the valves reach a given value, involves supplying electric power to a coil in the valves (104, 106, 108) which produce a magnetic field to open the valves, the valves are heated by a resistive loss in the coil.

**8.** Method of claim 4, **characterized in that** after opening all the gas injector valves (104, 106, 108, 110), the shutoff valve (102) is opened to operate the internal combustion engine by gas fuel.

**9.** Device to control the operation of a fuel injection system of a gas fuel and a liquid fuel operated internal combustion engine, **characterized by** a means to determine a start situation of the combustion engine, to close a shut off valve (101) of a gas fuel injection system of the combustion engine and start the combustion engine by liquid fuel and further operate gas fuel injector valves (104, 106, 108, 110) of the combustion engine, while still holding the shutoff valve (102) closed.
